# EUROPEAN PATENT SPECIFICATION

(11) **EP 2 553 546 B1**
(45) Date of publication and mention of the grant of the patent: **12.12.2018**
(21) Application number: 11763182.0
(22) Date of filing: 31.03.2011
(51) Int. Cl.: G06F 3/00, H04L 12/00

(54) **BULK UDTA CONTROL GUI**
UDTA-MASSENSTEUERUNGS-GUI
IUG DE COMMANDE D'UDTA EN MASSE

(30) Priority: 01.04.2010 US 341567 P
(43) Date of publication of application: 06.02.2013
(73) Proprietor: InterDigital Madison Patent Holdings, 75017 Paris (FR)
(72) Inventor: FOOTE, Evan, West Lafayette, Indiana 47906-4268 (US)
(74) Representative: Huchet, Anne
(86) International application number: PCT/US2011/000574
(87) International publication number: WO 2011/123175

(56) References cited:
- US-A1- 2004 187 156
- US-A1- 2004 261 110
- US-A1- 2007 203 979
- US-A1- 2009 172 757
- US-A1- 2009 172 757
- US-A1- 2010 070 997
- US-A1- 2010 070 997

## Description

### TECHNICAL FIELD

This disclosure relates to the field of Universal Digital Terminal Adapters (UDTAs). More particularly, this disclosure relates to Graphical User Interfaces (GUIs) for controlling groups of Universal Digital Terminal Adapters.

### BACKGROUND OF THE INVENTION

A UDTA is used to tune, receive, or otherwise decode digital cable. With cable providers switching from analog transmission to digital transmission, UDTA are necessary to decode the digitally encoded content of the digital transmission. In certain multi-dwelling environments, such as apartment complexes, hotels, motels, etc.; where a common analog cable feed was distributed to multiple rooms or apartments, multiple UDTAs are now required to provide the same functionality (i.e. providing cable service to each room/apartment). As such it would be advantageous to be able to control the multiple UDTAs from a single common interface.

Known systems are disclosed in the patent applications US 2009/172757 A1 and US 2010/070997 A1.

### SUMMARY OF THE INVENTION

The invention is defined by the appended independent claims.

Embodiments of the invention include a method for controlling multiple universal digital terminal adapters (UDTAs). The method comprises providing a listing of UDTAs available for control and providing controls for one or more of the UDTAs in the listing of UDTAs. In certain embodiments the method further comprises receiving a command via the controls for one or more of the UDTAs and performing the command.

Other embodiments of the invention also include a user interface for controlling multiple universal digital terminal adapters (UDTAs). The user interface comprises a field for displaying a listing of UDTAs available for control; and controls for the UDTAs listed in the field.

Still other embodiments include a computer readable medium containing instructions for performing for controlling multiple UDTAs. The instructions include steps for providing a listing of UDTAs available for control; and providing controls for one or more of the UDTAs in the listing of UDTAs.

Still other embodiments include a system. The system comprises multiple Universal digital terminal adapters (UDTAs), a computer, and a user interface. The computer is connected to the multiple UDTAs. The user interface is for controlling the multiple universal digital terminal adapters (UDTAs) via the computer. The user interface comprises a field for displaying a listing of UDTAs available for control and controls for the UDTAs listed in the field.

### BRIEF DESCRIPTION OF THE DRAWINGS

The subject matter that is regarded as the invention is particularly pointed out and distinctly claimed in the claims at the conclusion of the specification. The foregoing and other features and advantages of the invention will be apparent from the following detailed description taken in conjunction with the accompanying drawings.
Figure 1 is a block diagram of a system comprising multiple universal digital terminal adapters (UDTAs) in accordance with an embodiment of the invention.
Figure 2 is a diagram of a user interface for controlling multiple UDTAs before the listing of the available UDTAs is populated in accordance with an embodiment of the invention.
Figure 3 is a diagram of a user interface for controlling multiple UDTAs after the listing of the available UDTAs is populated in accordance with an embodiment of the invention.
Figure 4 is a diagram of a user interface for controlling multiple UDTAs wherein additional information about a UDTA is provided in a pop-up window in accordance with an embodiment of the invention.
Figure 5 is a flowchart depicting a method for controlling multiple UDTAs in accordance with an embodiment of the invention.

### DETAILED DESCRIPTION OF THE INVENTION

It is important to note that the embodiments disclosed by the invention are only examples of the many advantageous uses of the innovative teachings herein. In general, statements made in the specification of the present application do not necessarily limit any of the various claimed inventions. Moreover, some statements may apply to some inventive features but not to others. In general, unless otherwise indicated, singular elements may be in plural and vice versa with no loss of generality. In the drawings, like numerals refer to like parts through several views.

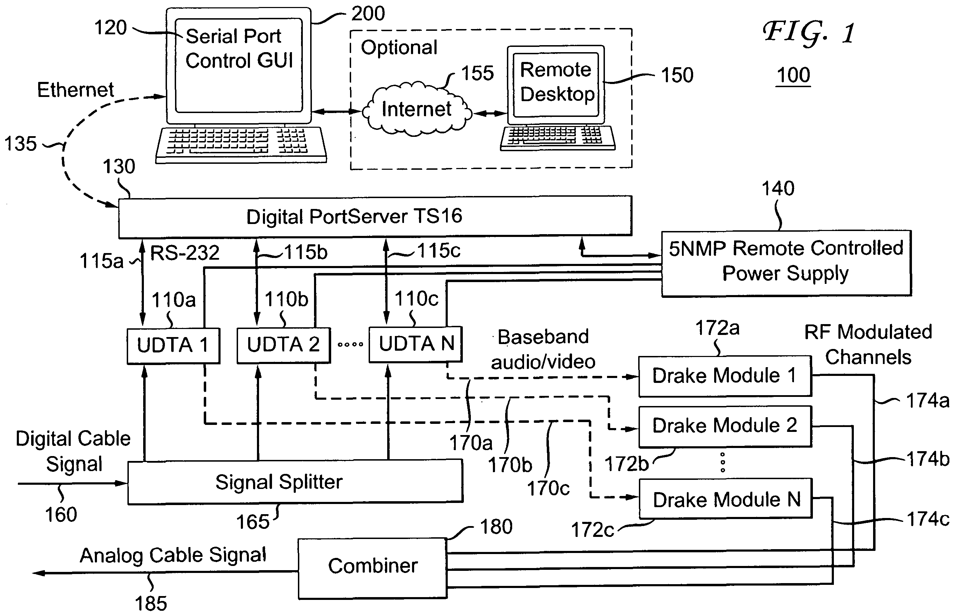

One example of a system having the multiple UDTAs grouped together for control and distribution of the cable signal can be seen in Figure 1. The system 100 includes multiple UDTAs 110a, 110b, 110c and at least one computer 120 running a user interface 200 for controlling the UDTAs 110a, 110b, 110c. The UDTAs 110a, 110b, 110c are connected to the computer 120 either directly or through port server 130. In this example, the UDTAs 110a, 110b, 110c are connected to the port server 120 via RS-232 connections 115a, 115b, 115c while the port server 130 is connected to the computer 120 via an Ethernet connection. Also seen in this example is a remote controlled power supply 140 connected to the port server for providing power to the UDTAs 110a, 110b, 110c.

This allows the UDTAs 110a, 110b, 110c to be controlled by a single access point through one or more connected computers 120. Thus a technician or other user can access and control the multiple UDTAs 110a, 110b, 110c either directly through the connected computer(s) 120 or optionally via a computer 150 at a remote location over the internet 155.

The UDTAs 110a, 110b, 110c receive a digital cable signal 160 through a splitter 165. The digital cable signal 160 is decoded by the UDTAs 110a, 110b, 110c into baseband audio video signals 170a, 170b, 170c. The baseband audio and video signals 170a, 170b, 170c can then be converted to a RF Modulated Channels 174a, 174b, 174c, (for example by Drake Modules 172a, 172b, 172c) and combined into an analog cable signal 180 by combiner 180 (for providing cable service to each room/apartment).

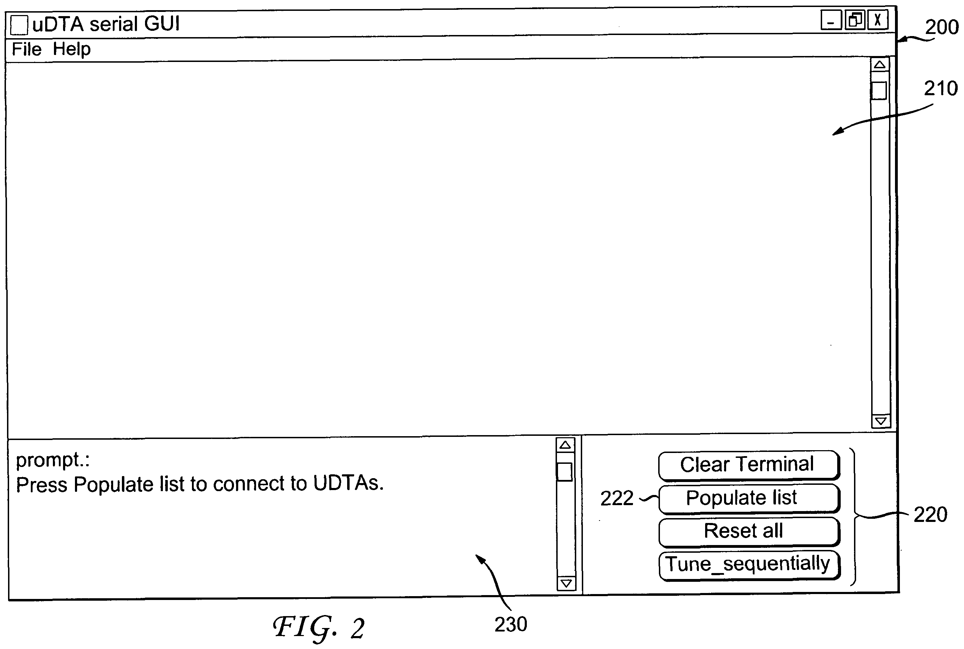

To provide the control of the multiple UDTAs, a user interface is provided. An example of such a user interface can be seen in Figure 2. In Figure 2 the user interface 200 is a graphical user interface. In this embodiment, the user interface includes a field 210 for displaying a listing of UDTAs available for control, controls 220 for controlling one or more of the UDTAs, and a text box 230.

In the example of Figure 2, the user interface 200 is depicted with field 210 unpopulated with a listing of the UDTAs available for control. That is, this is what the GUI 200 looks like before the user does anything. The text box 230 prompts the user to hit "Populate list". A "Populate list" button 222 is provided as part of the controls 220 for controlling one or more of the UDTAs.

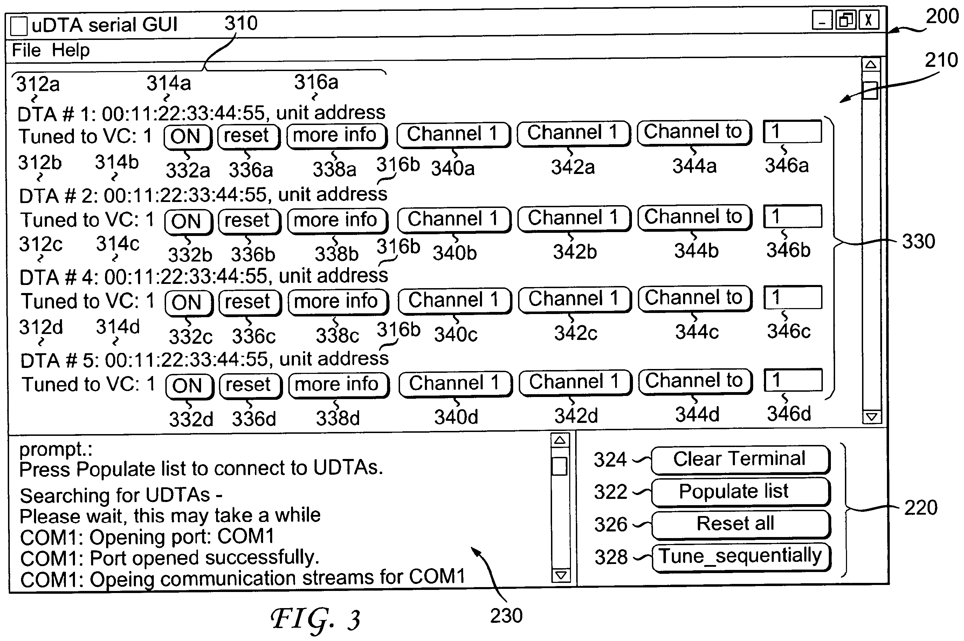

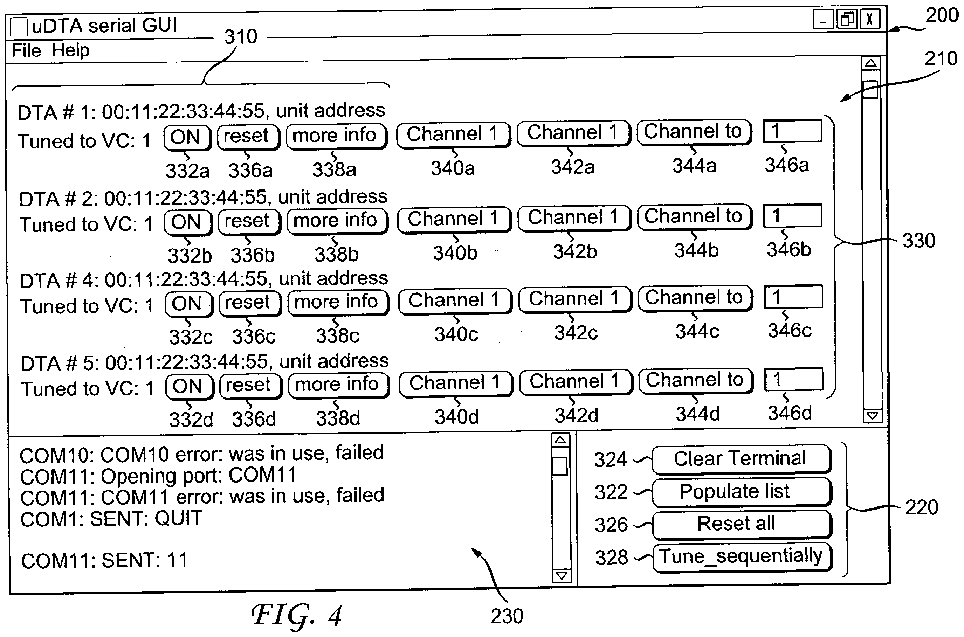

Once the user hits "Populate list" button 222, several things happen. The application providing the GUI 200 finds all the UDTAs 110a, 110b, 110c attached to the computer 120 (either directly or through a Port Server 130). It does this by sending out a request for each of the UDTAs to go into "Really-Remote Control" mode (ASCII "42405"), and then after a short delay it asks them to respond (ASCII "PLEASE: :THANKYOU!"). If a UDTA responds ("ALRIGHT: :NOPROBLEM"), the GUI application will add it to its list of UDTAs available. An example of this can be seen in Figures 3 and 4.

In certain embodiments, the GUI application will also ask for some additional information (the UDTA's identifiers, MAC address and Unit address, channel tuned to). In some embodiments, The GUI application will populate the modifiable field 210 with this additional information 310 including the UDTAs' identifier 312a-d, MAC address 314a-d, Unit address 316a-d, and the current virtual channel the UDTA is tuned to 318a-d,. The GUI application can also change the second button in the bottom right from a "Populate list" button 222 to "Refresh list" button 322.

The GUI application's list of UDTAs available for control is dynamic - if a user were to hook up 20 UDTAs, the GUI application would account for that. If the user hooked up 1000 UDTAs, the GUI would account for that too. Every UDTA is given its own set of controls. In the example of Figures 3 and 4 these controls are provided as buttons 330.

Some examples of these controls 330 include an "ON" button 332a-d, a "OFF" button 334a, a "Reset" button 336a-d, a "More info" button 338a-d, a "Channel Up" button 340a-d, a "Channel Down" button 342a-d, a "Channel to" button 344a-d, and a modifiable field 346a-d for entering a desired channel. The functionality of these buttons is described below.

ON/OFF - The "ON" 332a-d and "Off' 334a buttons, when activated, turn the UDTA Off and On at the hardware level, by controlling its power (See remote controlled power supply 140 in Figure 1). The "ON" button 332a-d is green and pressed. The "OFF" button 334a is red and depressed (see Figure 4).

Reset - The "Reset" button 336a-d, when activated, turns the UDTA Off and immediately afterwards On at the software level, by doing a software reset.

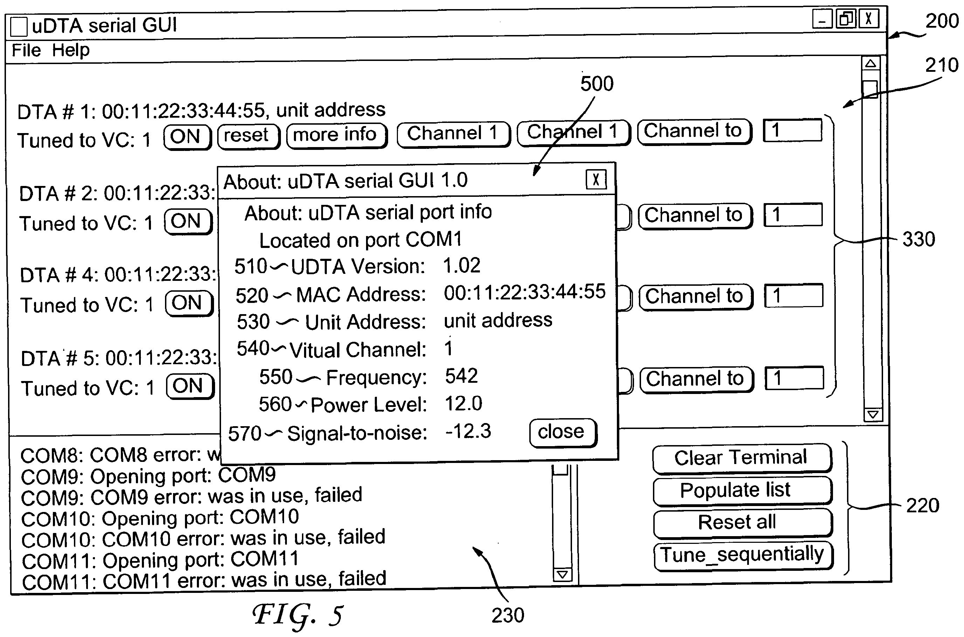

More info - The "More info" button 338a-d, when activated, provides important diagnostic information about an Individual UDTA. This information can be provided in a pop-up screen 500 such as seen in Figure 5. In this embodiment, the information provided is limited to the software on the UDTA such as the software version 510, MAC address 520, unit address 530, current virtual channel 540, current channel frequency 550, power level 560, and signal to noise ratio 570. In other embodiments, additional information could be provided.

Channel (up/down) - The "Channel Up" 340a-d and "Channel Down" 342a-d buttons, when activated, allow the user to tune to the next or previous channel.

Channel to - The "Channel to" button 344a-d, when activated, attempts to tune to the channel in the virtual channel map that is input into the modifiable field 346a-d.

At the bottom of the example GUI 200 of Figures 3 and 4 is the text box 230 which provides important diagnostic and debugging information. The text in here can be highlighted, copied or saved to a file. Other options include a fully workable terminal that allows a user to have complete control of any connected UDTA with keyboard interaction, similar to the command prompt (or a batch file). As the GUI application is communicating with the UDTAs, the text box is updating with the most recent information.

In addition to the controls 330 provided for controlling the individual UDTAs, The GUI 200 can also provide global commands 220 that control all UDTA's. Examples of such controls include a "Clear Terminal" button 324, the previously mentioned "Populate List" 222 and "Refresh List" 322 buttons, a "Reset All" button 326, and a "Tune Sequentially" button 328. The functionality of these buttons is described below.

Clear Terminal - The "Clear Terminal" button 324, when activated, removes all the text in the text box 230 to prevent clutter.

Populate List / Refresh List - The "Populate List" 222, and "Refresh List" 322 buttons, when activated, ping all the serial ports for UDTAs (If a user had 20 UDTAs with the program running, then hooked up 20 more, and pressed "Refresh List", they would populate the list of UDTAs available for control).

Reset all - The "Reset all" button 326, when activated, does a software reset on all of the UDTAs.

Tune sequentially - The "Tune sequentially" button 328, when activated, takes the current virtual channel of the first UDTA, and forces the second UDTA to tune to the next virtual channel after it. This is accomplished by first tuning the second UDTA to the channel of the first UDTA, and then logically tuning up. It then repeats that process for every UDTA in the list. Such that the third UDTA is tuned to the third available virtual channel, the forth UDTA is tuned to the forth available virtual channel and so forth. This results in each of the available UDTA outputting a different tuned channel which can then be combined (using combiner 180 after being converted from and baseband audio-video signals 170a-c into an radio frequency modulated signals 174a-c by Drake modules 172a-c) into and analog cable signal 185 (See Figure 1) that can then distributed to the various dwellings of a multi-dwelling environment.

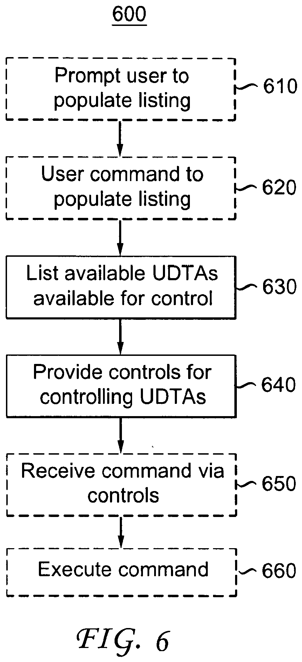

An exemplary method 600 of controlling multiple UDTAs can be seen in Figure 6. In this embodiment, the method includes the optional steps of providing a prompt to the user to populate the listing of UDTAs available for control (step 610) and receiving a user command to populate the listing of UDTAs available for control (step 620). The UDTAs available for control can then be listed (step 630) and controls for the UDTAs are provided (step 640). The embodiment of Figure 6 also includes the steps of receiving commands provided via the controls (step 650) and performing or executing the commands (step 660).

An example of providing a prompt to a user to populate the listing of available UDTAs (step 610) can be seen in Figure 2 where in the text box 230 the user is instructed to press "Populate List." The receiving of the command to populate the list (620) and the execution of the command is also explained above in relation to Figures 2 and 3.

An example of providing a listing of UDTAs available for control (step 630) and providing controls for the UDTAs (Step 640) can be seen in Figures 3 and 4. The description of the controls 220 and 320 in relation to Figures 3, 4, and 5 provide examples of receiving a command (step 650) and performing the command (step 660). For example, when the more info button 338a is activated the pop-up screen 500 depicted in Figure 5 is provided.

While one embodiment has been focused on, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this disclosure and are within the scope of this disclosure.

Most preferably, the principles of the invention can be implemented in hardware, firmware, software, or any combination thereof. Moreover, the software is preferably implemented as an application program tangibly embodied on a program storage unit or computer readable medium. One of ordinary skill in the art would recognize that a "machine readable medium" is a medium capable of storing data and can be in a form of a digital circuit, an analogy circuit or combination thereof. The application program may be uploaded to, and executed by, a machine comprising any suitable architecture. Preferably, the machine is implemented on a computer platform having hardware such as one or more central processing units ("CPUs"), a memory, and input/output interfaces. The computer platform may also include an operating system and microinstruction code. The various processes and functions described herein may be either part of the microinstruction code or part of the application program, or any combination thereof, which may be executed by a CPU, whether or not such computer or processor is explicitly shown. In addition, various other peripheral units may be connected to the computer platform such as an additional data storage unit and a printing unit.

## Claims

1. A method for controlling multiple universal digital terminal adapters, UDTAs, the method performed by a device (120, 150) and comprising:
providing a listing of UDTAs available for control;
providing controls for one or more of the UDTAs in the listing of UDTAs; and
receiving a control command for controlling at least one of the UDTAs in the listing;
if the control command is a tune sequentially command, sequentially tuning each of the UDTAs in the listing to a next channel, where after each of the UDTAs in the listing is tuned to a different channel.

2. The method of claim 1, wherein the listing of UDTAs available for control is provided in response to a user command.

3. The method of claim 2, wherein the user command is received in response to a prompt provided to the user.

4. The method of claim 1, wherein the provided listing of UDTAs available for control further comprises additional information about each of the available UDTAs.

5. The method of claim 4, wherein the additional information for each of the UDTAS comprises one or more of:
a unit identifier;
a MAC address;
a unit address; and
the virtual channel to which the UDTA is currently tuned.

6. The method of claim 1, further comprising providing a text box for providing additional information about UDTAs available for control.

7. The method of claim 6, wherein the additional information comprises one or more of:
user prompts;
diagnostic information; and
debugging information.

8. The method of claim 6, wherein the provided text box is further configured to receive commands from a user.

9. The method of claim 1, wherein the provided controls for one or more of the UDTAs in the listing of UDTAs comprises controls for individually controlling each of the UDTAs in the listing, the controls comprise one or more of the following:
ON;
OFF;
reset;
UDTA information;
channel up;
channel down; and
direct channel input.

10. The method of claim 1 or 9, wherein the provided controls for one or more of the UDTAs in the listing of UDTAs comprises global controls for controlling all of the listed UDTAs.

11. The method of claim 10, wherein the global controls comprise one or more of the following:
Clear terminal;
populate list;
refresh list, reset all; and
tune sequentially.

12. A device (120, 150) for controlling multiple universal digital terminal adapters, UDTAs, the device comprising a processor and a user interface, configured to:
provide a listing of UDTAs available for control;
provide controls for entry of control commands for one or more of the UDTAs in the listing of UDTAs; and
receive a control command for controlling at least one of the UDTAs in the listing;
sequentially tune each of the UDTAs in the listing to a next channel if the received control command is a tune sequentially control command, where after each of the UDTAs are tuned to a different available channel.

13. The device according to claim 12, wherein the processor and the user interface are further configured to provide the listing of UDTAs available for control in response to a user command.

14. The device according to claim 13, wherein the processor and the user interface are further configured to provide a prompt to the user and to receive the user command in response to the prompt provided to the user.

15. The device according to claim 12, wherein the processor and the user interface are further configured to provide additional information about each of the available UDTAs in the listing of UDTAs available for control.

## Patentansprüche

1. Verfahren zum Steuern mehrerer Universal-Digital-Endgerät-Adapter, UDTAs, wobei das Verfahren durch eine Vorrichtung (120, 150) ausgeführt wird und umfasst:
Bereitstellen einer Auflistung von für die Steuerung verfügbaren UDTAs;
Bereitstellen von Steuerungen für einen oder mehrere der UDTAs in der Auflistung von UDTAs; und
Empfangen eines Steuerbefehls zum Steuern mindestens eines der UDTAs in der Auflistung;
aufeinanderfolgendes Abstimmen jedes der UDTAs in der Auflistung auf einen nächsten Kanal, falls der Steuerbefehl ein Befehl zum aufeinanderfolgenden Abstimmen ist, wonach jeder der UDTAs in der Auflistung auf einen anderen Kanal abgestimmt ist.

2. Verfahren nach Anspruch 1, wobei die Auflistung für die Steuerung verfügbarer UDTAs als Reaktion auf einen Nutzerbefehl bereitgestellt wird.

3. Verfahren nach Anspruch 2, wobei der Nutzerbefehl als Reaktion auf eine für den Nutzer bereitgestellte Eingabeaufforderung empfangen wird.

4. Verfahren nach Anspruch 1, wobei die bereitgestellte Auflistung für die Steuerung verfügbarer UDTAs ferner zusätzliche Informationen über jeden der UDTAs umfasst.

5. Verfahren nach Anspruch 4, wobei die zusätzlichen Informationen für jeden der UDTAs eines oder mehrere der Folgenden umfassen:
eine Einheitskennung;
eine MAC-Adresse;
eine Einheitsadresse; und
den virtuellen Kanal, auf den der UDTA gegenwärtig abgestimmt ist.

6. Verfahren nach Anspruch 1, das ferner das Bereitstellen eines Textfelds zum Bereitstellen zusätzlicher Informationen über für die Steuerung verfügbare UDTAs umfasst.

7. Verfahren nach Anspruch 6, wobei die zusätzlichen Informationen eine oder mehrere der Folgenden umfassen:
Nutzereingabeaufforderungen;
Diagnoseinformationen; und
Austestinformationen.

8. Verfahren nach Anspruch 6, wobei das bereitgestellte Textfeld ferner dafür konfiguriert ist, Befehle von einem Nutzer zu empfangen.

9. Verfahren nach Anspruch 1, wobei die bereitgestellten Steuerungen für einen oder mehrere der UDTAs in der Auflistung von UDTAs Steuerungen zum einzelnen Steuern jedes der UDTAs in der Auflistung umfassen, wobei die Steuerungen eines oder mehrere der Folgenden umfassen:
EIN;
AUS;
Zurücksetzen;
UDTA-Informationen;
Kanal aufwärts;
Kanal abwärts; und
Kanaldirekteingabe.

10. Verfahren nach Anspruch 1 oder 9, wobei die bereitgestellten Steuerungen für einen oder mehrere der UDTAs in der Auflistung von UDTAs globale Steuerungen zum Steuern aller aufgelisteten UDTAs umfassen.

11. Verfahren nach Anspruch 10, wobei die globalen Steuerungen eines oder mehrere der Folgenden umfassen:
Endgerät löschen;
Liste belegen;
Liste auffrischen, alles zurücksetzen; und
aufeinanderfolgend Abstimmen.

12. Vorrichtung (120, 150) zum Steuern mehrerer Universal-Digital-Endgerät-Adapter, UDTAs, wobei die Vorrichtung einen Prozessor und eine Nutzerschnittstelle umfasst, die konfiguriert sind zum:
Bereitstellen einer Auflistung von für die Steuerung verfügbaren UDTAs;
Bereitstellen von Steuerungen für den Eintrag von Steuerbefehlen für einen oder mehrere der UDTAs in der Auflistung von UDTAs; und
Empfangen eines Steuerbefehls zum Steuern mindestens eines der UDTAs in der Auflistung;
aufeinanderfolgendes Abstimmen jedes der UDTAs in der Auflistung auf einen nächsten Kanal, falls der empfangene Steuerbefehl ein Steuerbefehl zum aufeinanderfolgenden Abstimmen ist, wonach jeder der UDTAs auf einen anderen verfügbaren Kanal abgestimmt ist.

13. Vorrichtung nach Anspruch 12, wobei der Prozessor und die Nutzerschnittstelle ferner dafür konfiguriert sind, als Reaktion auf einen Nutzerbefehl die Auflistung für die Steuerung verfügbarer UDTAs bereitzustellen.

14. Vorrichtung nach Anspruch 13, wobei der Prozessor und die Nutzerschnittstelle ferner dafür konfiguriert sind, eine Eingabeaufforderung für den Nutzer bereitzustellen und als Reaktion auf die für den Nutzer bereitgestellte Eingabeaufforderung den Nutzerbefehl zu empfangen.

15. Vorrichtung nach Anspruch 12, wobei der Prozessor und die Nutzerschnittstelle ferner dafür konfiguriert sind, in der Auflistung für die Steuerung verfügbarer UDTAs zusätzliche Informationen über jeden der verfügbaren UDTAs bereitzustellen.

## Revendications

1. Procédé pour contrôler de multiples adaptateurs de terminal numérique universels (UDTA), le procédé étant mis en oeuvre par un dispositif (120, 150) et comprenant :
la fourniture d'une liste d'UDTA disponibles pour une commande ;
la fourniture de commandes pour un ou plusieurs UDTA dans la liste d'UDTA ; et
la réception d'une commande de contrôle pour le contrôle d'au moins un des UDTA de la liste ;
si la commande de contrôle est une commande de syntonisation séquentielle (« tune sequentially »), la syntonisation séquentielle de chacun des UDTA de la liste sur un canal suivant, où chacun des UDTA de la liste est ensuite syntonisé sur un canal différent.

2. Procédé selon la revendication 1, dans lequel la liste d'UDTA disponibles pour une commande est fournie en réponse à une commande utilisateur.

3. Procédé selon la revendication 2, dans lequel la commande utilisateur est reçue en réponse à une invite fournie à l'utilisateur.

4. Procédé selon la revendication 1, dans lequel la liste fournie d'UDTA disponibles pour une commande comprend en outre des informations supplémentaires sur chacun des UDTA disponibles.

5. Procédé selon la revendication 4, dans lequel les informations supplémentaires pour chacun des UDTA comprennent un ou plusieurs éléments parmi les suivants :
un identificateur d'unité ;
une adresse MAC ;
une adresse d'unité ; et
le canal virtuel sur lequel l'UDTA est syntonisé actuellement.

6. Procédé selon la revendication 1, comprenant en outre la fourniture d'une zone de texte pour fournir des informations supplémentaires sur les UDTA disponibles pour une commande.

7. Procédé selon la revendication 6, dans lequel les informations supplémentaires comprennent un ou plusieurs éléments parmi les suivants :
invites utilisateur ;
informations de diagnostic ; et
informations de débogage.

8. Procédé selon la revendication 6, dans lequel la zone de texte fournie est en outre configurée pour recevoir des commandes d'un utilisateur.

9. Procédé selon la revendication 1, dans lequel les commandes fournies pour l'un ou plusieurs des UDTA de la liste d'UDTA comprend des commandes pour contrôler individuellement chacun des UDTA de la liste, les commandes comprenant un ou plusieurs éléments parmi les suivants :
ON (marche) ;
OFF (arrêt) ;
reset (réinitialisation) ;
UDTA information (informations UDTA) ;
channel up (canal suivant) ;
channel down (canal précédent) ; et
direct channel input (entrée canal direct).

10. Procédé selon la revendication 1 ou 9, dans lequel les commandes fournies pour l'un ou plusieurs des UDTA de la liste d'UDTA comprend des commandes globales pour contrôler tous les UDTA listés.

11. Procédé selon la revendication 10, dans lequel les commandes globales comprennent un ou plusieurs éléments parmi les suivants :
Clear terminal (effacer le texte) ;
populate list (remplir la liste) ;
refresh list (rafraîchir la liste), reset all (tout réinitialiser) ; et
tune sequentially (syntoniser de façon séquentielle).

12. Dispositif (120, 150) pour contrôler de multiples adaptateurs de terminal numérique universels (UDTA), le dispositif comprenant un processeur et une interface utilisateur, configurés pour :
une liste d'UDTA disponibles pour une commande ;
fournir des commandes pour entrer des commandes de contrôle pour un ou plusieurs UDTA dans la liste d'UDTA ; et
recevoir une commande de contrôle pour le contrôle d'au moins un des UDTA de la liste ;
syntoniser de façon séquentielle chacun des UDTA de la liste sur un canal suivant si la commande de contrôle est une commande de syntonisation séquentielle, où chacun des UDTA est ensuite syntonisé sur un canal disponible différent.

13. Dispositif selon la revendication 12, dans lequel le processeur et l'interface utilisateur sont en outre configurés pour fournir la liste des UDTA disponibles pour une commande en réponse à une commande utilisateur.

14. Dispositif selon la revendication 13, dans lequel le processeur et l'interface utilisateur sont en outre configurés pour fournir une commande à l'utilisateur et pour recevoir la commande utilisateur en réponse à l'invite fournie à l'utilisateur.

15. Dispositif selon la revendication 12, dans lequel le processeur et l'interface utilisateur sont en outre configurés pour fournir des informations supplémentaires sur chacun des UDTA disponibles de la liste des UDTA disponibles pour une commande.
